# EUROPÄISCHE PATENTANMELDUNG

(11) **EP 2 400 363 A1**
(43) Veröffentlichungstag der Anmeldung: **28.12.2011**
(21) Anmeldenummer: 10166958.8
(22) Anmeldetag: 23.06.2010
(51) Int. Cl.: G06F 1/16, H01H 13/702

(54) **Bedieneinrichtung zur Bedienung einer Maschine aus der Automatisierungstechnik**

(71) Anmelder: SIEMENS AKTIENGESELLSCHAFT, 80333 München (DE)
(72) Erfinder: Bunk, Jens-Andre, 91056, Erlangen (DE)

(57) **Zusammenfassung**

Die Erfindung betrifft eine Bedieneinrichtung (1) zur Bedienung einer Maschine aus der Automatisierungstechnik, wobei die Bedieneinrichtung eine durchsichtige elektrisch nicht leitende Scheibe (2) aufweist, wobei die Scheibe (2) eine Außenseite (14) und eine dem Inneren (19) der Bedieneinrichtung (1) zugewandte Innenseite (15) aufweist, wobei an der Außenseite (14) der Scheibe (2) eine Folientastatur (3) angeordnet ist, wobei die Scheibe (2) durch die Scheibe (2) von der Außenseite (14) zur Innenseite (15) verlaufende Kanäle (13a,13b) aufweist, wobei in den Kanälen (13a,13b) ein elektrisch leitendes Element (16a,16b) angeordnet ist, wobei die Folientastatur (3) über die elektrisch leitenden Elemente (16a,16b) mit einer Elektronik (9) der Bedieneinrichtung (1) verbunden ist. Die Erfindung schafft eine Bedieneinrichtung (1) zur Bedienung einer Maschine aus der Automatisierungstechnik, bei der eine Folientastatur (3) an einer beliebigen Stelle an der Frontscheibe der Bedieneinrichtung (1) angebracht werden kann.

## Beschreibung

Die Erfindung betrifft eine Bedieneinrichtung zur Bedienung einer Maschine aus der Automatisierungstechnik.

Bei handelsüblichen Bedieneinrichtungen zur Bedienung von Maschinen aus der Automatisierungstechnik, wie z.B. Werkzeug- und/oder Produktionsmaschinen, bei denen die Front aus Alu, Blech oder Kunststoff besteht, werden von der Folientastatur die Leiterbahnen der Folientastatur über spezielle Flachbandkabel, sogenannte Folientails, ins Innere der Bedieneinrichtung zu einer dort angeordneten Elektronik der Bedieneinrichtung geführt. Hierzu wird ein größerer Durchbruch in der Frontscheibe geschaffen und die Folientails durch den Durchbruch durchgeführt. Anschließend wird gegebenenfalls falls notwendig der Durchbruch über z.B. eine Verklebung abgedichtet. Diese Verbindungstechnik ist bekannt und bewährt und wird in den Bereichen der Front der Bedieneinrichtung (bei Alu-, Blech- oder Kunststofffronten) eingesetzt bei denen diesbezüglich keine Fertigungsprobleme entstehen. Konstruktiv bedingt liegt der Durchbruch für die Durchführung des Folientails in der Frontscheibe unterhalb der Folientastatur.

Bei dieser aus dem Stand der Technik bekannten Verbindungstechnik muss wie schon gesagt ein größerer Durchbruch in die Frontscheibe der Bedieneinrichtung eingebracht werden, um eine elektrische Verbindung von Folientastatur und der Elektronik der Bedieneinrichtung zu ermöglichen. Ein vergleichbarer größerer Durchbruch in eine Glasscheibe ist grundsätzlich technisch möglich, aber sehr aufwändig und mit einer erheblich gesteigerten Bruchgefahr der Scheibe verbunden. Umgehen ließe sich dieses Problem durch den Einsatz von Kunststoffscheiben, da man bei diesen problemlos größere Durchbrüche einbringen kann. Kunststoffscheiben weisen aber den prinzipiellen Nachteil auf, dass sie gegenüber Glasscheiben weniger kratzfest sind und eine geringere Beständigkeit gegenüber Chemikalien aufweisen. Weiterhin besteht bei Kunststoffscheiben die Gefahr des Verfärbens des Materials in Abhängigkeit von Umgebungseinflüssen wie z.B. Temperatur, Chemikalien und Schadgasen.

Weiterhin können bei handelsüblichen Bedieneinrichtungen die Folientastaturen nicht an beliebiger Stelle der Frontscheibe angebracht werden, da der Durchbruch für das Folientail von außen nicht sichtbar sein soll und somit z.B. unter einer Frontblende verschwinden muss, so dass die Folientastatur somit nur am Rande der Frontscheibe angebracht werden kann. Weiterhin kann der für die Durchführung des Folientails benötigte große Durchbruch in der Scheibe schlecht abgedichtet werden, so dass Schadgase und Feuchtigkeit in das Innere der Bedieneinrichtung eindringen können und dort Schäden an der Elektronik verursachen können.

Es ist Aufgabe der Erfindung, eine Bedieneinrichtung zur Bedienung einer Maschine aus der Automatisierungstechnik zu schaffen, bei der eine Folientastatur an einer beliebigen Stelle an der Frontscheibe der Bedieneinrichtung angebracht werden kann. Die Erfindung ermöglicht einen wesentlich größeren Freiraum bei der Gestaltung von Bedienfronten hinsichtlich der Anzahl, Form und Lage der Folientastaturen.

Diese Aufgabe wird gelöst durch eine Bedieneinrichtung zur Bedienung einer Maschine aus der Automatisierungstechnik, wobei die Bedieneinrichtung eine durchsichtige elektrisch nicht leitende Scheibe aufweist, wobei die Scheibe eine Außenseite und eine dem Inneren der Bedieneinrichtung zugewandte Innenseite aufweist, wobei an der Außenseite der Scheibe eine Folientastatur angeordnet ist, wobei die Scheibe durch die Scheibe von der Außenseite zur Innenseite verlaufende Kanäle aufweist, wobei in den Kanälen ein elektrisch leitendes Element angeordnet ist, wobei die Folientastatur über die elektrisch leitenden Elemente mit einer Elektronik der Bedieneinrichtung verbunden ist.

Vorteilhafte Ausbildungen der Bedieneinrichtung ergeben sich aus den abhängigen Ansprüchen.

Es erweist sich als vorteilhaft, wenn die Scheibe als Glasscheibe oder als Kunststoffscheibe ausgebildet ist. Glasscheiben weisen gegenüber Kunststoffscheiben eine höhere Kratzfestigkeit und Chemikalienbeständigkeit auf. Eine Kunststoffscheibe hat gegenüber einer Glasscheibe den Vorteil, dass sie kostengünstiger ist.

Weiterhin erweist es sich als vorteilhaft, wenn das elektrisch leitende Element als Stift oder als elektrisch leitende Paste oder als elektrisch leitendes Silikonmaterial oder als eine Leitungsader ausgebildet ist. Eine solche Ausbildung des elektrisch leitenden Elements stellt eine übliche Ausbildung dar.

Ferner erweist es sich als vorteilhaft, wenn der Stift eine Goldbeschichtung aufweist, da der Stift dann besonders robust gegenüber ungünstigen Umgebungseinflüssen, wie z.B. Feuchtigkeit, ist.

Eine Ausbildung der Maschine aus der Automatisierungstechnik als Werkzeug- und/oder Produktionsmaschine stellt eine übliche Ausbildung der Maschine dar.

Ein Ausführungsbeispiel der Erfindung ist in der Zeichnung dargestellt und wird im Folgenden näher erläutert. Dabei zeigen:
- FIG 1: eine Ansicht von vorne auf eine erfindungsgemäße Bedieneinrichtung in Form einer schematisierten Darstellung, die sich einem Bediener der Bedieneinrichtung beim Bedienen der Maschine aus der Automatisierungstechnik darstellt,
- FIG 2: eine schematisierte Darstellung einer Scheibe der Bedieneinrichtung, an der eine Folientastatur angeordnet ist,
- FIG 3: eine Scheibe der Bedieneinrichtung,
- FIG 4: eine Schnittansicht der Scheibe,
- FIG 5: ein erstes Ausführungsbeispiel eines elektrisch leitenden Elements,
- FIG 6: eine schematisierte Darstellung der erfindungsgemäßen Bedieneinrichtung in Form einer Ansicht von oben auf die Bedieneinrichtung,
- FIG 7: ein zweites Ausführungsbeispiel des elektrisch leitenden Elements, und
- FIG 8: ein drittes Ausführungsbeispiel des elektrisch leitenden Elements.

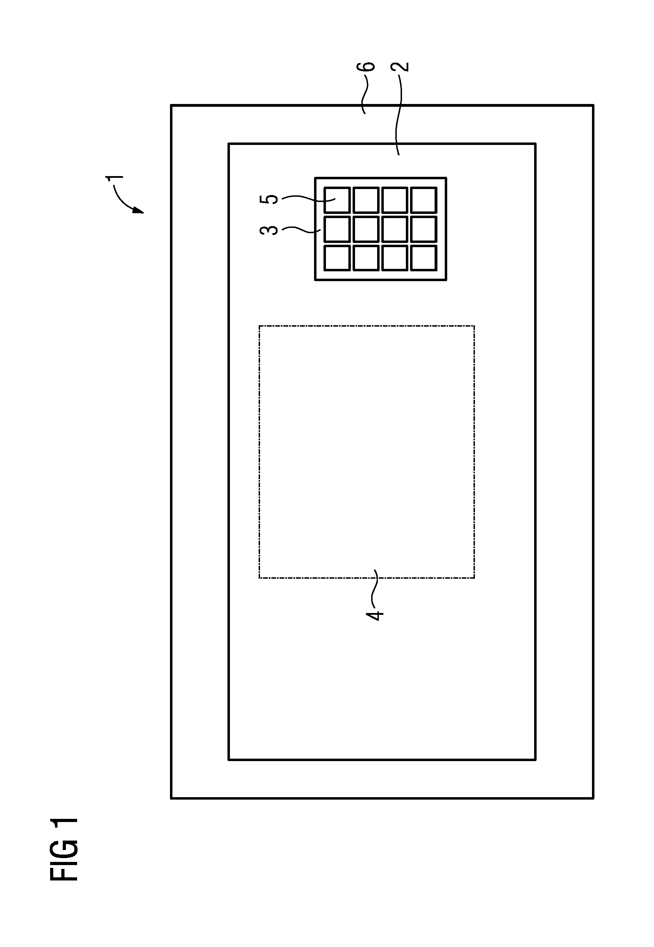

In FIG 1 ist in Form einer schematisierten Darstellung eine Ansicht von vorn auf eine erfindungsgemäße Bedieneinrichtung 1 zur Bedienung einer Maschine aus der Automatisierungstechnik dargestellt. Gezeigt ist dabei die Ansicht von vorne auf die Bedieneinrichtung, die sich einem Bediener der Bedieneinrichtung beim Bedienen der Maschine aus der Automatisierungstechnik darstellt. Die Bedieneinrichtung 1 weist eine durchsichtige elektrisch nicht leitende Scheibe 2 auf, die im Rahmen des Ausführungsbeispiels als Glasscheibe ausgebildet ist. Alternativ kann die Scheibe auch aus Kunststoff ausgebildet sein und somit als Kunststoffscheibe vorliegen. Eine Ausbildung der Scheibe 2 als Glasscheibe hat jedoch gegenüber einer Ausbildung der Scheibe 2 als Kunststoffscheibe den Vorteil, dass eine Scheibe aus Glas wesentlich kratzbeständiger und unempfindlicher gegenüber der Einwirkung von Chemikalien ist als eine Scheibe aus Kunststoff.

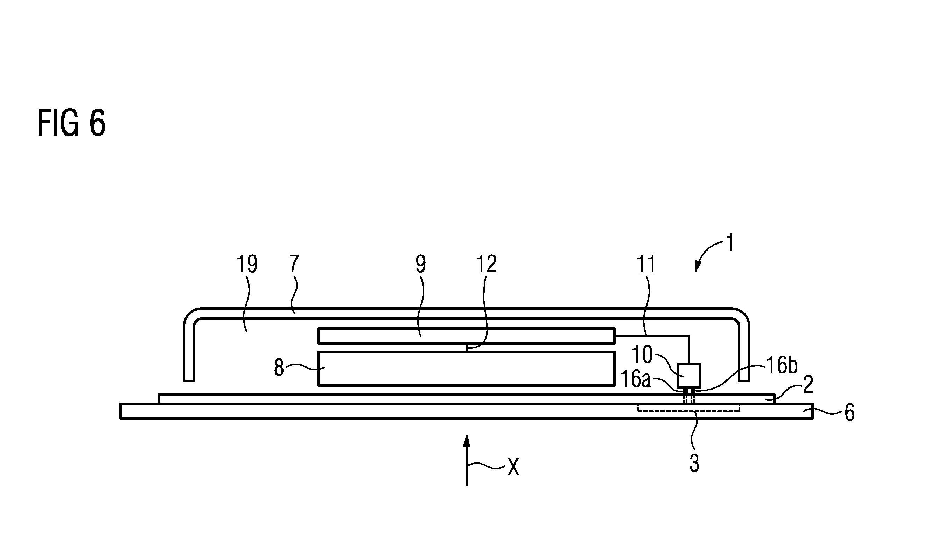

Die Scheibe 2 wird im Rahmen des Ausführungsbeispiels eine Frontblende 6 auf, die den Randbereich der Scheibe 2 abdeckt. Die Bedieneinrichtung 1 weist weiterhin eine Folientastatur 3 auf, welche Tasten aufweist, wobei der Übersichtlichkeit halber nur eine Taste 5 mit einem Bezugszeichen versehen ist. Weiterhin weist die Scheibe 2 einen in FIG 1 strichpunktiert gekennzeichneten Bereich 4 auf, hinter dem ein Display 8 (siehe FIG 6) angeordnet ist.

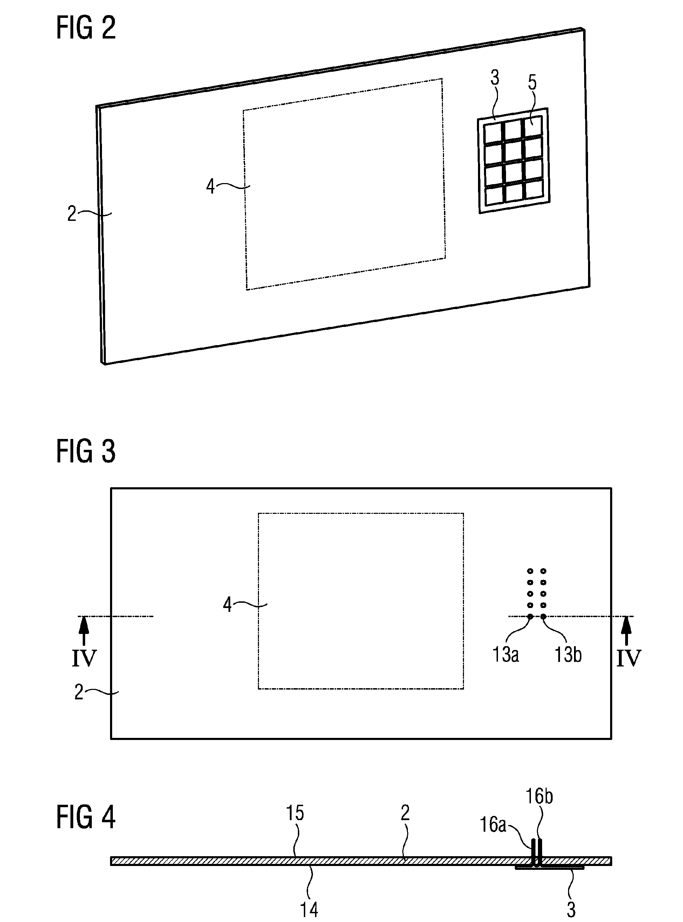

In FIG 2 sind in Form einer schematisierten perspektivischen Darstellung die Scheibe 2 und die Folientastatur 3 dargestellt. Gleiche Elemente sind dabei in FIG 2 mit den gleichen Bezugszeichen versehen wie in FIG 1. Die Scheibe 2 weist eine einem Bediener beim Bedienen der Bedieneinrichtung zugewandte Außenseite 14 und eine dem Inneren 19 der Bedieneinrichtung 1 zugewandte Innenseite 15 auf (siehe FIG 4 und FIG 6). Die Außenseite 14 verläuft parallel zur Innenseite 15. Die Folientastatur 3 ist an der Außenseite 14 (siehe FIG 4) der Scheibe 2 angeordnet.

In FIG 3 ist die Scheibe 2 ohne die an ihr auf der Außenseite 14 angebrachte Folientastatur 3 dargestellt. Gleiche Elemente sind dabei mit den gleichen Bezugszeichen versehen wie in FIG 1. Zur Verbindung der Folientastatur 3 mit einer im Inneren 19 der Bedieneinrichtung 1 angeordneten Elektronik 9 (siehe FIG 6) weist die Scheibe 2 durch die Scheibe hindurch von der Außenseite 14 der Scheibe 2 zur Innenseite 15 der Scheibe 2 verlaufende Kanäle auf, wobei der Übersichtlichkeit halber nur die Kanäle 13a und 13b mit Bezugszeichen versehen sind. Im Rahmen des Ausführungsbeispiels liegen dabei die Kanäle in Form von durch die Scheibe verlaufenden Löchern vor. Die Kanäle weisen dabei vorzugsweise eine maximale Querschnittsfläche von 4mm² auf und können z.B. eine runde, quadratische, rechteckige oder eine andere beliebige Form aufweisen. Es sei dabei angemerkt, dass in eine Glasscheibe das Einbringen von solchen Kanälen, welche nur eine kleine Querschnittsfläche (maximale Querschnittsfläche von 4mm²) aufweisen, z.B. mittels Bohrungen, technologisch sehr leicht und schell bewerkstelligt werden kann, während das Einbringen von den bei Kunststoffscheiben handelsüblich verwendeten großen Durchbrühen bei Glasscheiben technologisch nur sehr aufwendig zu realisieren ist und mit einer erheblich gesteigerten Bruchgefahr der Glasscheibe verbunden ist.

In FIG 4 ist in Form einer schematisierten Darstellung der in FIG 3 längs der Schnittlinie verlaufende Schnitt durch die Scheibe 2 dargestellt, wobei zusätzlich die an der Außenseite 14 der Scheibe 2 angeordnete Folientastatur 3 dargestellt ist. Die Folientastatur 3 kann z.B. an der Außenseite 14 der Scheibe 2 mittels einer Klebeverbindung befestigt sein. Zur elektrischen Verbindung der Folientastatur 3 mit der im Rahmen des Ausführungsbeispiels im Inneren der Bedieneinrichtung 1 angeordneten Elektronik 9 der Bedieneinrichtung 1 ist in den Kanälen jeweilig ein elektrisch leitendes Element angeordnet, über das jeweils eine einzelne elektrisch leitende Verbindung zwischen der Folientastatur 3 und der Elektronik 9 herstellt wird. Im Rahmen des Ausführungsbeispiels ist dabei in den Kanälen jeweilig ein einzelnes elektrisch leitendes Element angeordnet.

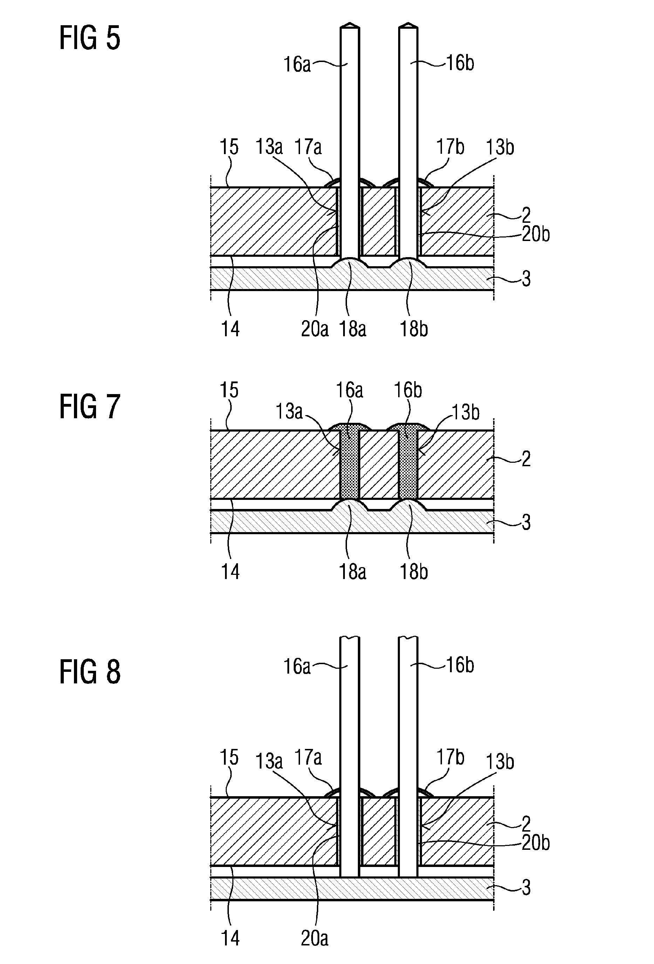

In FIG 5 ist im Rahmen einer schematisierten Darstellung ein Ausschnitt der Scheibe 2 dargestellt. Das elektrisch leitende Element ist dabei als Stift ausgebildet. Die Scheibe 2 weist eine Außenseite 14 und eine Innenseite 15 auf. Durch die Scheibe hindurch verlaufen die Kanäle 13a und 13b, wobei im Kanal 13a das als Stift ausgebildete elektrisch leitende Element 16a und im Kanal 13b das als Stift ausgebildete elektrisch leitende Element 16b angeordnet ist und durch den jeweiligen Kanal hindurchgeführt ist. Die einzelnen Kanäle sind dabei zueinender beanstandet und somit gegeneinander elektrisch isoliert angeordnet. Die Folientastatur 3 weist im Gegensatz zu handelsüblich bekannten Folientastaturen kein Folientail zur elektrischen Verbindung mit der Außenwelt auf, sondern sie weist im Rahmen des Ausführungsbeispiels gemäß FIG 5 elektrisch leitende Kontaktbereiche auf, wobei im Rahmen der Schnittdarstellung gemäß FIG 5 nur die beiden Kontaktbereiche 18a und 18b dargestellt sind. Die Kontaktbereiche 18a und 18b weisen einen elektrisch leitenden Kontakt mit den ihr jeweilig zugeordneten elektrisch leitenden Elementen 16a und 16b auf. Die elektrisch leitenden Elemente 16a und 16b sind im Rahmen des Ausführungsbeispiels mit Hilfe von Sicherungsscheiben 17a und 17b an der Innenseite 15 der Scheibe 2 befestigt. Über die Kontaktbereiche werden elektrisch leitende Verbindungen zwischen den elektrisch leitenden Elementen und der Folientastatur 3 hergestellt.

Im Rahmen einer vorteilhaften Ausführungsform weisen die Stifte, welche als elektrisch leitende Elemente dienen, eine Goldbeschichtung auf und sind somit besonders robust gegenüber ungünstigen Umgebungseinflüssen, wie z.B. Feuchtigkeit.

In FIG 6 ist im Rahmen einer schematisierten Darstellung eine Ansicht auf die Bedieneinrichtung 1 von oben dargestellt. Gleiche Elemente sind dabei mit den gleichen Bezugszeichen versehen wie in den vorhergehenden Figuren. An der Außenseite der Scheibe 2 ist die Folientastatur 3 angeordnet, wobei die Folientastatur 3 in der dargestellten Ansicht von oben auf die Bedieneinrichtung 1 gestrichelt dargestellt ist, da die Folientastatur 3 von der Frontblende 6 in dieser Ansicht verdeckt wird. Die Frontblende 6 ist in Richtung X vor der Scheibe 2 angeordnet. Durch die Scheibe 2 hindurch verlaufen die Kanäle und elektrisch leitenden Elemente, wobei in FIG 6 nur die beiden elektrisch leitenden Elemente 16a und 16b dargestellt sind. Über die elektrisch leitenden Elemente wird im Rahmen des Ausführungsbeispiels ein Stecker 10 gesteckt. Der Stecker 10 ist über eine mehradrige elektrische Leitung 11 mit einer im Rahmen des Ausführungsbeispiels im Inneren 19 der Bedieneinrichtung 1 angeordneten Elektronik 9 elektrisch leitend verbunden. Solchermaßen ist die Folientastatur über die elektrisch leitenden Elemente, den Stecker 10 und die Leitung 11 mit der Elektronik 9 für die Übermittelung von elektrischen Signalen miteinander verbunden. Die elektrischen Signale gelangen solchermaßen von der Folientastatur 3 zur Elektronik 9 und werden von der Elektronik 9 ausgewertet. Zur Ansteuerung eines Displays 8 ist die Elektronik 9 über eine mehradrige elektrische Leitung 12 mit dem Display 8 elektrisch leitend verbunden. Weiterhin weist die Bedieneinrichtung 1 an ihrer Rückseite ein Gehäuse 7 auf.

In FIG 7 ist eine weitere Ausführungsform der Erfindung dargestellt. Die in FIG 7 dargestellte Ausführungsform entspricht im Grundaufbau im Wesentlichen der vorstehend in FIG 5 beschriebenen Ausführungsform. Gleiche Elemente sind daher in FIG 7 mit den gleichen Bezugszeichen versehen wie in FIG 5. Der wesentliche Unterschied besteht darin, dass bei der Ausführungsform gemäß FIG 7 die elektrisch leitenden Elemente 16a und 16b nicht als Stifte, sondern als elektrisch leitende Paste oder elektrisch leitendes Silikonmaterial ausgebildet sind. In diesem Fall weist der Stecker 10 gemäß FIG 6 keine Buchsen, sondern Stifte auf, welche zur Verbindung des Steckers 10 mit den elektrisch leitenden Elementen in die elektrisch leitenden Elemente, d.h. in die Paste oder das Silikonmaterial, hineingesteckt werden.

In FIG 8 ist eine weitere Ausführungsform der Erfindung dargestellt. Diese Ausführungsform entspricht im Grundaufbau im Wesentlichen der vorstehend in FIG 5 beschriebenen Ausführungsform. Gleiche Elemente sind daher in FIG 8 mit den gleichen Bezugszeichen versehen wie in FIG 5. Der einzige wesentliche Unterschied besteht darin, dass bei der Ausführungsform gemäß FIG 8 die elektrisch leitenden Elemente 16a und 16b in Form von Leitungsadern ausgebildet sind und aus der Folientastatur 3 herausragen. Die Leitungsadern können gegebenenfalls mit einer Isolierung versehen sein und solchermaßen in Form einer einadrigen Leitung vorliegen, an deren Ende z.B. ein Stecker zur Verbindung mit der Elektronik 9 angebracht ist.

Vorzugsweise können falls notwendig, insbesondere bei einer Ausbildung der elektrisch leitenden Elemente als Stifte oder Leitungsadern, gegebenenfalls Dichtungen vorhanden sein, die den zwischen den elektrisch leitenden Elementen und den Kanälen entstehenden vorhandenen Spalt, durch den eventuell Chemikalien, Gase, Feuchtigkeit oder Schmutzpartikel in das Innere 19 der Bedieneinrichtung 1 eindringen könnten, abdichten. Die Dichtungen können z.B. aus einem Silikonmaterial oder aus Gummi oder aus einem Klebstoff bestehen. Die Dichtungen können z.B. wie in FIG 5 und FIG 8 dargestellt zwischen dem jeweiligen Kanal und dem in dem Kanal angeordneten elektrisch leitenden Element angeordnet sein, wobei die Dichtungen in FIG 5 und FIG 8 mit den Bezugszeichen 20a und 20b versehen sind. Die Dichtungen können z.B. aber auch in Form der Sicherungsscheiben 17a und 17b vorliegen, die neben ihrer Befestigungsfunktionalität auch gleichzeitig eine Abdichtungsfunktionalität aufweisen können.

Die vorgestellte erfindungsgemäße Lösung ermöglicht einen wesentlich größeren Freiraum bei der Gestaltung von Bedienfronten. So können die Anzahl, die Form und die Lage von Folientastaturen frei gewählt werden. Durch die vorgeschlagene erfindungsgemäße Kontaktierungsvariante gibt es diesbezüglich keine Einschränkungen mehr. Die handelsüblich bekannten Abdichtungen von Bedienfronten (IP54, IP65, NEMA 4 etc.) und die Beständigkeit gegen diverse Medien (z.B. Kühl- und Schmierstoffe) sind auch weiterhin voll umfänglich realisierbar. Ferner sind durch die Erfindung die bisher zur elektrischen Anbindung der Folientastatur notwendigen Silberleitlackfolientails oder die noch aufwändigeren Kupferfolientails nicht mehr notwendig. Weiterhin ist auch ein einfacher Austausch der Folientastatur möglich. So können beschädigte oder abgenutzte Folientastaturen ohne die Montage der im Inneren angeordneten Hardware der Bedieneinrichtung durch neue Folientastaturen ersetzt werden. Weiterhin besteht auch die Möglichkeit, durch den Lieferanten oder Endanwender eine korrekte, z.B. landestypische undurchsichtige Frontfolie auf die Scheibe z.B. vor Ort beim Lieferanten oder Endanwender aufbringen zu lassen.

Die Erfindung ermöglicht den Verzicht auf Folientails mit all ihren Nachteilen und gestattet einen wesentlich größeren Spielraum bei der Gestaltung von Bedieneinrichtungen. Die Erfindung ermöglicht ferner die bewährte Folientastentechnologie mit ihrer hohen Robustheit und den in ihr gegebenenfalls integrierten haptischen, insbesondere taktilen Rückmeldemöglichkeiten weiter zu verwenden.

## Patentansprüche

1. Bedieneinrichtung (1) zur Bedienung einer Maschine aus der Automatisierungstechnik, wobei die Bedieneinrichtung (1) eine durchsichtige elektrisch nicht leitende Scheibe (2) aufweist, wobei die Scheibe (2) eine Außenseite (14) und eine dem Inneren (19) der Bedieneinrichtung (1) zugewandte Innenseite (15) aufweist, wobei an der Außenseite (14) der Scheibe (2) eine Folientastatur (3) angeordnet ist, wobei die Scheibe (2) durch die Scheibe (2) von der Außenseite (14) zur Innenseite (15) verlaufende Kanäle (13a,13b) aufweist, wobei in den Kanälen (13a,13b) ein elektrisch leitendes Element (16a,16b) angeordnet ist, wobei die Folientastatur (3) über die elektrisch leitenden Elemente (16a,16b) mit einer Elektronik (9) der Bedieneinrichtung (1) verbunden ist.

2. Bedieneinrichtung nach Anspruch 1,
**dadurch gekennzeichnet, dass** die Scheibe (2) als Glasscheibe oder als Kunststoffscheibe ausgebildet ist.

3. Bedieneinrichtung nach einem der vorhergehenden Ansprüche, **dadurch gekennzeichnet, dass** das elektrisch leitende Element (16a,16b) als Stift oder als elektrisch leitende Paste oder als elektrisch leitendes Silikonmaterial oder als eine Leitungsader ausgebildet ist.

4. Bedieneinrichtung nach Anspruch 3,
**dadurch gekennzeichnet, dass** der Stift (16a,16b) eine Goldbeschichtung aufweist.

5. Bedieneinrichtung nach einem der vorhergehenden Ansprüche, **dadurch gekennzeichnet, dass** die Maschine aus der Automatisierungstechnik als Werkzeug- und/oder Produktionsmaschine ausgebildet ist.
